# EUROPÄISCHE PATENTSCHRIFT

(11) **EP 1 390 281 B1**
(45) Veröffentlichungstag und Bekanntmachung des Hinweises auf die Patenterteilung: **22.06.2005**
(21) Anmeldenummer: 02724130.6
(22) Anmeldetag: 04.04.2002
(51) Int. Cl.: B65G 47/00, B65G 47/50, B65G 47/52, B65G 47/64, B65G 47/51, B65H 29/52, B65H 29/62

(54) **ZWISCHENSPEICHERVORRICHTUNG UND EIN VERFAHREN ZUM TRANSPORT VON GEGENSTÄNDEN**
INTERMEDIATE STORAGE DEVICE AND METHOD FOR TRANSPORTING OBJECTS
DISPOSITIF DE STOCKAGE INTERMEDIAIRE ET PROCEDE POUR TRANSPORTER DES OBJETS

(30) Priorität: 12.05.2001 DE 10123327
(43) Veröffentlichungstag der Anmeldung: 25.02.2004
(73) Patentinhaber: KBA-GIORI S.A., 1003 Lausanne (CH)
(72) Erfinder: SAUER, Hartmut, Karl, 97267 Himmelstadt (DE)
(74) Vertreter: Ganguillet, Cyril
(86) Internationale Anmeldenummer: PCT/DE2002/001221
(87) Internationale Veröffentlichungsnummer: WO 2002/098770

(56) Entgegenhaltungen:
- EP-A- 1 057 758
- EP-A- 1 067 068
- DE-A- 19 908 354
- DE-A- 19 946 531
- US-A- 3 939 621
- US-A- 3 993 189
- US-A- 4 808 057
- US-A- 5 590 507
- US-A- 5 919 025

## Beschreibung

Die vorliegende Erfindung betrifft eine Zwischenspeichervorrichtung und ein Verfahren zum Transport von Gegenständen gemäß dem Oberbegriff der Ansprüche 1, 3 oder 16, insbesondere Banknoten, die es ermöglicht, aus einem Strom von Druckerzeugnissen einer laufenden Produktion eine Probe zu entnehmen, um deren Qualität zu überprüfen und nach der Prüfung die Probe wieder in den Strom der Druckerzeugnisse einzugliedern. Dabei stellt sich bei nummerierten Druckerzeugnissen das Problem, dass eine solche Probe an exakt der gleichen Stelle in den Strom wieder eingegliedert werden muss, an dem sie entnommen worden ist, um die durchgehende Nummerierung der Druckerzeugnisse nicht zu unterbrechen und so z. B. eine Vollständigkeitskontrolle der Druckerzeugnisse am Ende der Produktion zu ermöglichen

Als eine solche Zwischenspeichervorrichtung kann im einfachsten Falle eine Fördereinrichtung dienen, auf der die Druckerzeugnisse der Reihe nach gefördert werden, und die es einer Bedienungsperson ermöglicht, zu überprüfende Druckerzeugnisse herauszugreifen, zu untersuchen und sie anschließend in die durch die Entnahme entstandene Lücke des Stroms der Druckerzeugnisse wieder einzufügen. Da sich die Lücke jedoch während der Untersuchungszeit mit dem Strom der Druckerzeugnisse weiter bewegt, ist die zur Untersuchung zur Verfügung stehende Zeit äußerst kurz, und hohe Fördergeschwindigkeiten der Fördereinrichtung können nicht erreicht werden, was die Produktionsgeschwindigkeit der gesamten Produktionsstrecke begrenzt.

Die EP 1 057 758 A1 und die DE 199 08 354 A1 offenbaren Förderstrecken für Stückgut mit Paternostern.

Die US 3,993,189 A zeigt eine Förderstrecke mit auf Trägern abgelegten Gegenständen, wobei die Träger mittels einer Transporteinrichtung von einem Abschnitt auf einen anderen Abschnitt einer vertikal verlaufenden Bahn bewegt werden.

Die US 3,939,621 A beschreibt eine Vorrichtung zum Verarbeiten von Stapeln aus Banknoten, bei der schadhafte Stapel zur Kontrolle einer Transporteinrichtung entnommen werden und anschließend fehlerfrei wieder zugeführt werden.

Der Erfindung liegt die Aufgabe zugrunde, eine Zwischenspeichervorrichtung und ein Verfahren zum Transport von Gegenständen zu schaffen.

Die Aufgabe wird erfindungsgemäß durch die Merkmale der Ansprüche 1, 3 oder 16 gelöst.

Die mit der Erfindung erzielbaren Vorteile bestehen insbesondere darin, dass auf einem in direkter Verbindung relativ kurzen Weg zwischen Eingabevorrichtung und Ausgabevorrichtung der Zwischenspeichervorrichtung eine relativ lange Zwischenspeicherzeit realisierbar ist, die um so größer ist, je länger der Anteil der in der ersten bzw. zweiten Richtung orientierten Abschnitte an der Gesamtlänge der Bahn ist. Dadurch ist es möglich, eine Probe zu entnehmen, sie gründlich zu untersuchen und anschließend in einer geringen Entfernung vom Ort der Entnahme in den Strom der Druckerzeugnisse wieder einzugliedern. Andererseits ermöglicht die Zwischenspeichervorrichtung bei im wesentlichen unveränderter Untersuchungszeit eine erhebliche Heraufsetzung der Fördergeschwindigkeit der Druckerzeugnisse und damit einen schnelleren und wirtschaftlicheren Betrieb der die Produktionsstrecke bildenden Druck-, Schneide- und Verpackungsvorrichtungen.

Banknoten werden im allgemeinen auf Bögen in einer Matrixanordnung mit mehreren Zeilen und Spalten gedruckt. Durch anschließendes Schneiden der gestapelten Bögen in Längs- und Querrichtung entsteht mit jedem Arbeitstakt der Schneidmaschine eine Reihe von nebeneinanderliegenden Stapeln. Vorteilhafterweise ist daher die Zwischenspeichervorrichtung so konstruiert, dass sie in jedem Arbeitstakt die einer solchen Reihe entsprechende Mehrzahl von Stapeln aufnehmen kann, wohingegen die Entnahmevorrichtung für die Probenentnahme jeweils zum Entnehmen eines einzelnen Stapels ausgelegt ist.

Vorzugsweise nimmt die Eingabevorrichtung die Mehrzahl der Stapel jeweils in einer Längsrichtung nebeneinander geordnet auf, entsprechend der Anordnung, in der die Stapel zuvor vom Bogenstapel abgeschnitten worden sind. Indem die Stapel von der Ausgabevorrichtung quer zu dieser Längsrichtung ausgegeben werden, wird erreicht, dass eine bei der Probenentnahme entstandene Lücke in der Reihe von Stapeln bei der Ausgabe erhalten bleibt, so dass diese Lücke noch nach der Ausgabe aus der Zwischenspeichervorrichtung mit dem überprüften Stapel bequem wieder aufgefüllt werden kann.

Die Ausgabe der Stapel erfolgt vorzugsweise auf eine parallel zu der Längsrichtung fördernde Fördereinrichtung, um so den Strom der der Zwischenspeichervorrichtung jeweils in Form mehrerer nebeneinanderliegender Stapel zugeführten Druckerzeugnisse in einen Strom von einzeln aufeinanderfolgenden Stapeln umzuwandeln, die dann in einer nachgeordneten Stufe der Produktionsstrecke z.B. geordnet und abgepackt werden können.

Ein im wesentlichen vertikaler Verlauf der Bahn ermöglicht einen platzsparenden Aufbau der Zwischenspeichervorrichtung.

Beim Übergang der Stapel von einem aufwärts bewegten Abschnitt der Bahn zu einem abwärts bewegten sollte vermieden werden, dass die Stapel gewendet werden, denn eine auf den beim Eingeben in die Zwischenspeichervorrichtung oben liegenden Seiten der Druckerzeugnisse aufgedruckte Nummerierung sollte auch nach der Ausgabe sichtbar sein, um die Vollständigkeitskontrolle vor dem Verpacken zu ermöglichen. Um ein solches Wenden zu vermeiden, ist vorzugsweise eine Einrichtung zum Verschieben der Druckerzeugnisse von einem ersten vertikalen Abschnitt der Bahn auf einen in Gegenrichtung bewegten zweiten vertikalen Abschnitt der Bahn vorgesehen.

Diese Verschiebevorrichtung wird zweckmäßigerweise, genauso wie Eingabe- und Ausgabevorrichtung und Entnahmevorrichtung, in einer Ruhephase zwischen zwei Bewegungsschritten der schrittweise angetriebenen Bahn wirksam.

Die Verschiebung kann einfach und schonend dadurch erfolgen, dass die Träger für die Druckerzeugnisse jeweils an quer zur Umlaufrichtung der Bahn orientierten Schienen verschiebbar sind, und dass die Verschiebevorrichtung jeweils eine Verschiebung eines Trägers mitsamt der von ihm getragenen Druckerzeugnisse von ersten Schienen des ersten Abschnitts der Bahn auf zweite Schienen des zweiten Abschnitts bewirkt.

Um den Übergang einfacher und sicherer zu machen, umfasst die Verschiebevorrichtung zweckmäßigerweise Übergangsschienen, die einen Träger beim Verschieben von dem ersten auf die zweiten Schienen unterstützen.

Die Eingabevorrichtung und die Ausgabevorrichtung sind vorzugsweise jeweils an einem aufwärts bewegten Abschnitt der Bahn bzw. einem abwärts bewegten Abschnitt angeordnet, so dass oberhalb dieser Vorrichtungen ein für die Zwischenspeicherung nutzbarer Bereich der Bahn von erheblicher Länge untergebracht werden kann. Die Entnahmevorrichtung ist zweckmäßigerweise an dem aufwärts bewegten Abschnitt der Bahn angeordnet, um die Zwischenspeicherzeit möglichst vollständig für die Qualitätskontrolle nutzen zu können.

Eine Transporteinrichtung, die in einfacher Weise schwerkraftbetrieben sein kann, dient zweckmäßigerweise dazu, eine durch die Entnahmevorrichtung entnommene Probe in Richtung der Ausgabevorrichtung zu transportieren, so dass eine Person oder auch geeignetes Kontrollgerät die Probe am Ende der Transporteinrichtung aufnehmen und kontrollieren kann und sie anschließend in minimaler Entfernung vom Ort der Aufnahme in die entstandene Lücke wieder eingliedern kann, sobald diese die Ausgabevorrichtung erreicht oder sich ihr nähert.

Ein Ausführungsbeispiel der Erfindung ist in den Zeichnungen dargestellt und wird im folgenden näher beschrieben.

Es zeigen:
- Fig. 1: eine Seitenansicht der Zwischenspeichervorrichtung
- Fig. 2: eine Draufsicht auf die Zwischenspeichervorrichtung und ihr in einer Produktionsstrecke für Banknoten vor- und nachgeordnete Vorrichtungen
- Fig. 3: den unteren Wendebereich der Zwischenspeichervonichtung von Fig. 1

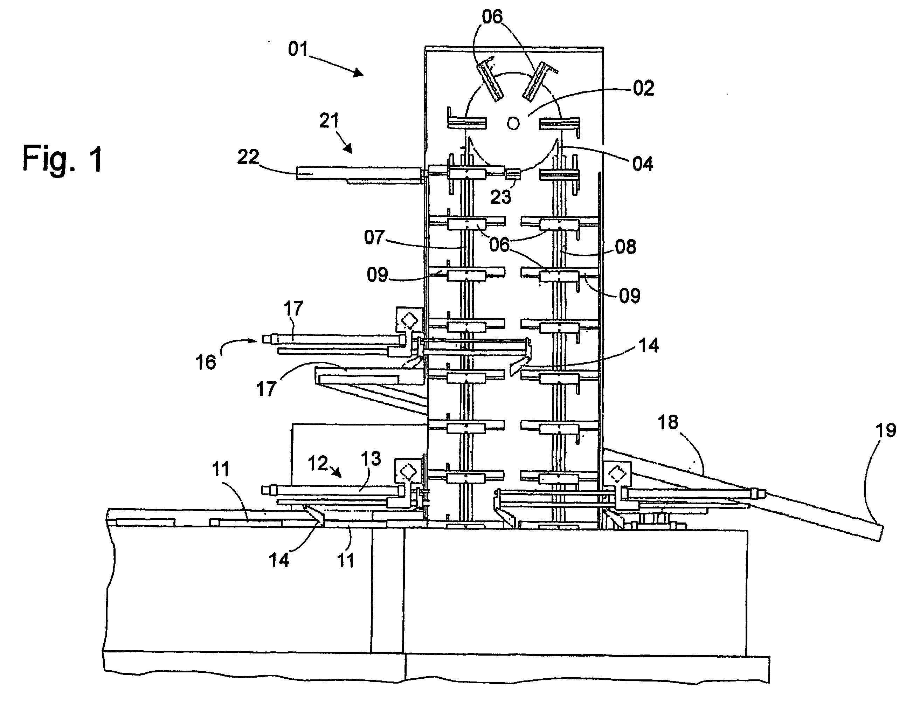

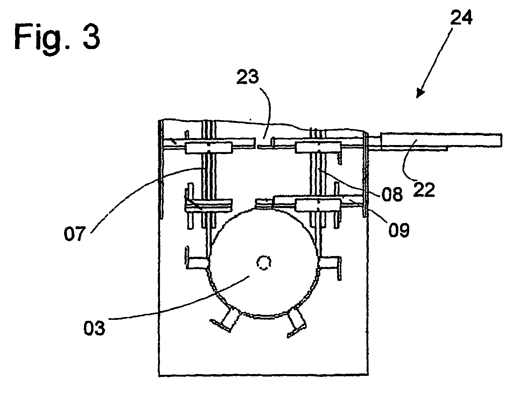

Fig. 1 zeigt einen Ausschnitt aus einer Banknoten-Produktionsstrecke in einer Seitenansicht, wobei die Zwischenspeichervorrichtung 01 aufgeschnitten dargestellt ist. Der Aufbau der Zwischenspeichervorrichtung 01 ist ähnlich einem Paternoster, mit zwei um ein oberes Wenderad 02 und ein unteres Wenderad 03 (siehe Fig. 3) geschlungenen endlosen Fördermittel 04, z. B. Ketten 04, an denen in regelmäßigen Abständen Führungsschienen 06 montiert sind. Die Führungsschienen 06 sind starr an die Ketten 04 gekoppelt und erstrecken sich jeweils senkrecht zu diesen.

Zwischen den zwei Wenderädem 02; 03 erstreckt sich jeweils ein vertikal aufwärts bewegter Abschnitt 07 bzw. ein abwärts bewegter Abschnitt 08, auf denen die dort horizontal orientierten Führungsschienen 06 jeweils plattenartige Fördermittel 09, z. B. Träger 09 halten.

Gegenstände 11, z. B. Stapel gebündelter Banknoten werden, jeweils zu mehreren in einer zur Ebene der Zeichnung senkrechten Richtung nebeneinanderliegend, auf einer Bandfördereinrichtung einer Eingabevorrichtung 12 des Zwischenspeichers 01 zugeführt. Die Eingabevorrichtung 12 umfasst durch einen Arbeitszylinder 13, z. B. Pneumatikzylinder 13 angetriebene, auf- und abwärts klappbare Schieber 14, die in der in der Fig. 1 gezeigten, abwärts geklappten Stellung hinter eine Reihe von Banknotenstapeln 11 eingreifen, um diese auf einen gegenüberliegenden Träger 09 der Zwischenspeichervorrichtung 01 zu verschieben. Nach dem Verschieben werden die Schieber 14 aufwärts geklappt, so dass sie mit einer nachrückenden Reihe von Stapeln 11 nicht zusammenstoßen und in die in Fig. 1 gezeigte Stellung zurückgefahren, um die nächste Reihe von Stapeln 11 auf einen weiteren Träger 09 zu schieben.

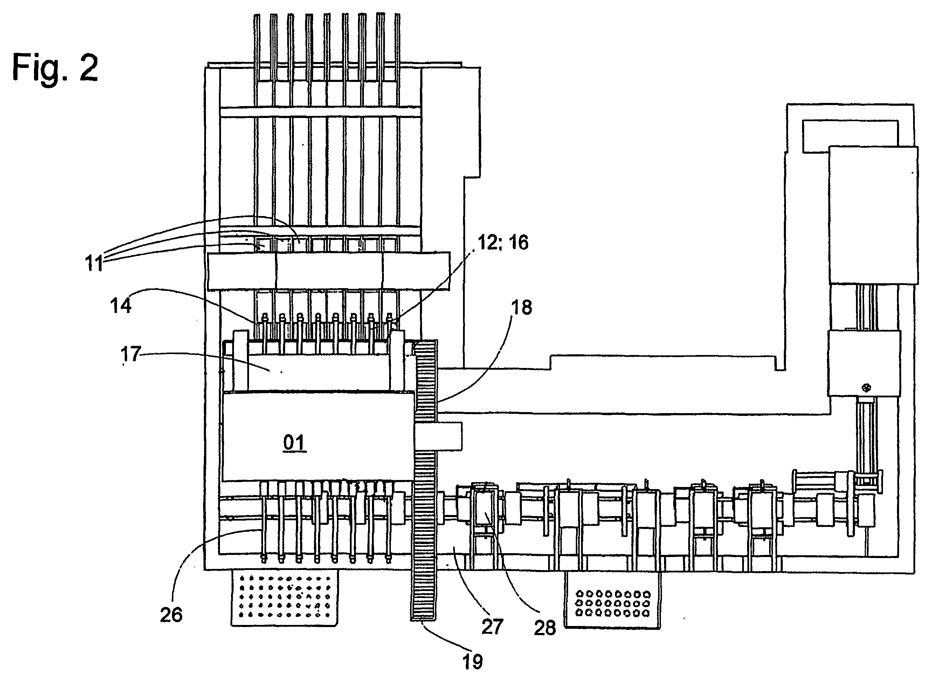

Oberhalb der Eingabevorrichtung 12 ist an dem aufwärts bewegten Abschnitt 07 eine Entnahmevorrichtung 16 angeordnet, die dazu dient, von einer Mehrzahl von auf einem auf ihrem Niveau befindlichen Trägem 09 getragenen Stapeln 11 einen aus der Zwischenspeichervorrichtung 01 zu entnehmen. Zu diesem Zweck umfasst die Entnahmevorrichtung 16 ebenfalls durch einen Pneumatikzylinder 13 angetriebene Schieber 14 in einer Zahl, die der Anzahl der in einer Reihe nebeneinander zugeführten Stapel 11 entspricht, und die jeweils einzeln steuerbar sind, um einen beliebigen der Stapel 11 zu entnehmen. Die Entnahmevorrichtung 16 umfasst ferner ein Förderband 17, das, wie in der Draufsicht der Fig. 2 besser zu erkennen ist, dazu dient, einen entnommenen Stapel 11 entlang der Front der Zwischenspeichervorrichtung 01 zu einer Transporteinrichtung 18 in Form einer abschüssigen Rollenbahn 18 zu befördern, auf der das entnommene Bündel bis zu einem für eine Bedienungsperson bequem erreichbaren Ort 19 geleitet.

Der Abstand zwischen den Führungsschienen 06 der Ketten 04 ist so festgelegt, dass immer dann, wenn sich ein Träger 09 in eine zum Beladen geeigneten Position an der Eingabevorrichtung 12 befindet, gleichzeitig auch eine Probenentnahme an der Entnahmevorrichtung 16 möglich ist.

Oberhalb der Entnahmevorrichtung 16, kurz vor Erreichen des oberen Wenderades 02, ist eine Verschiebevorrichtung 21 angeordnet. Die Verschiebevorrichtung 21 umfasst einen Arbeitszylinder 22, z. B. Pneumatikzylinder 22, der dazu dient, einen ihm gegenüberliegenden Träger 09 aus Führungsschienen 06 des aufwärts bewegten Abschnitts 07 in auf gleicher Höhe gegenüberliegende, leere Führungsschienen 06 des abwärts bewegten Abschnitts 08 zu verschieben, die soeben das obere Wenderad 02 umlaufen haben. Um zu gewährleisten, dass der Träger 09 bei der Verschiebung genau in die leeren Führungsschienen 06 trifft, sind Übergangsschienen 23 in geeigneter Höhe zwischen den zwei Abschnitten 06; 07 angeordnet.

Wie die Fig. 3 zeigt, ist eine entsprechend aufgebaute Verschiebevorrichtung 24 auch am unteren Ende des abwärts bewegten Abschnitts 08 vorgesehen, um kurz vor Erreichen des unteren Wenderades 03 die Träger 09 in den aufwärts bewegten Abschnitt 07 zu verschieben.

Bei der in den Figuren gezeigten Ausgestaltung der Zwischenspeichervorrichtung 01sind die Übergangsschienen 23 deutlich kürzer als die an den Ketten 04 montierten Führungsschienen 06, so dass es notwendig ist, in einem Arbeitstakt der Zwischenspeichervorrichtung 01 einen Träger 09 von einem der zwei Abschnitte 07; 08 der umlaufenden Bahn bis in den jeweils anderen zu verschieben. Alternativ besteht jedoch auch die Möglichkeit, die Übergangsschienen 23 so lang zu machen, dass sie in der Lage sind, einen Träger 09 (oder auch mehrere) zu unterstützen. In diesem Fall würde es genügen, in einem Arbeitstakt lediglich einen Träger 09 mit einer der Verschiebevorrichtungen 21; 24 auf die Übergangsschienen 23 zu schieben, wodurch der vorderste der in den Übergangsschienen 23 gehaltenen Träger 09 in die Führungsschienen 06 des jeweils gegenüberliegenden Abschnitts 07 bzw. 08 verdrängt wird. So kann der für die Verschiebevorrichtungen 21; 24 benötigte Hub verkürzt werden, und die Übergangsschienen 23 tragen zusätzlich zur Zwischenspeicherwirkung bei.

Die auf dem abwärts bewegten Abschnitt 08 verschobenen Träger 09 bewegen sich auf diesem schrittweise abwärts, bis sie eine Ausgabevorrichtung 26 (Fig. 2) in der Nähe des unteren Endes des Abschnitts 08 erreichen. Eine Bedienungsperson kann daher, wenn sie die erforderlichen Kontrollen wie etwa der Schnittgenauigkeit oder der Banderolenfestigkeit an einem mit Hilfe der Entnahmevorrichtung 16 entnommenen Stapel 11 vorgenommen hat, diesen in eine Einschleusstation 28 zurücklegen, die den Stapel 11 automatisch in das kontinuierlich laufende Kettensystem einschleust.

Der Aufbau der Ausgabevorrichtung 26 mit Pneumatikzylinder und Schieber ist weitgehend analog zu dem der Eingabevorrichtung 12. Sie schiebt die Stapel 11 auf eine Bandfördereinrichtung 27 aus, die während des Ausgabevorgangs angehalten ist und sich parallel zur Orientierung der Reihen von Stapeln 11 auf den Trägern 09 erstreckt.

Während eines Arbeitszyklus der Zwischenspeichervorrichtung 01 läuft die beladene Bandfördereinrichtung 27 kontinuierlich an der Zwischenspeichervorrichtung 01 vorbei bis die erste leere Kettenposition der Zwischenspeichervorrichtung 01 an der ersten Entnahmeposition vorbeifährt.

Wenn eine Lücke, die in der Anordnung der Stapel 11 bei der Entnahme einer Probe durch die Entnahmevorrichtung 16 vor dem Erreichen der Ausgabevorrichtung 26 entstanden ist, noch nicht wieder aufgefüllt ist, bleibt sie auch bei der Ausgabe der Stapel 11 auf die Bandfördereinrichtung 27 erhalten. Ein entnommenes Bündel kann daher, nach erfolgter Kontrolle auch auf der Bandfördereinrichtung 27 noch bequem wieder an seine ursprüngliche Stelle eingefügt werden.

### Bezugszeichenliste

- 01: Zwischenspeichervorrichtung
- 02: Wenderad, oberes
- 03: Wenderad, unteres
- 04: Fördermittel, Kette
- 05: -
- 06: Führungsschiene
- 07: Abschnitt, aufwärts bewegter
- 08: Abschnitt, abwärts bewegter
- 09: Fördermittel, Träger
- 10: -
- 11: Gegenstände, Stapel
- 12: Eingabevorrichtung
- 13: Arbeitszylinder, Pneumatikzylinder
- 14: Schieber
- 15: -
- 16: Entnahmevorrichtung
- 17: Förderband
- 18: Transportvorrichtung, Rollenbahn
- 19: Ort
- 20: -
- 21: Verschiebevorrichtung
- 22: Arbeitszylinder, Pneumatikzylinder
- 23: Übergangsschienen
- 24: Verschiebevorrichtung
- 25: -
- 26: Ausgabevorrichtung
- 27: Bandfördereinrichtung
- 28: Einschleusstation

## Patentansprüche

1. Zwischenspeichervorrichtung für zu transportierende Gegenstände, mit mindestens einem von auf Abschnitten (07; 08) einer Bahn geführten Fördermittel (04), an dem eine Mehrzahl von Trägern (09) angeordnet ist, mit einer Eingabevorrichtung (12) zum Eingeben der Gegenstände (11) an einer ersten Stelle der Bahn und einer Ausgabevorrichtung (26) zum Ausgeben der Gegenstände (11) an einer zweiten Stelle der Bahn, wobei die Träger (09) an einer ersten Stelle der Bahn aus den Fördermittel (04) entnehmbar und an einer zweiten Stelle der Bahn eingebbar sind, wobei eine Verschiebevorrichtung (21) zum Verschieben der Träger (09) von einem Abschnitt (07) der Bahn auf den anderen Abschnitt (08) angeordnet ist, **dadurch gekennzeichnet, dass** die Bahn schrittweise angetrieben ist und dass die Verschiebevorrichtung (21; 24) in einer Ruhephase zwischen zwei Bewegungsschritten der Bahn wirksam wird.

2. Zwischenspeichervorrichtung nach Anspruch 1, **dadurch gekennzeichnet, dass** die Gegenstände als Stapel (11) von Druckerzeugnissen ausgebildet sind.

3. Zwischenspeichervorrichtung nach Anspruch 2, **dadurch gekennzeichnet, dass** auf den Trägern (09) jeweils mehrere Gegenstände (11) angeordnet sind und dass eine Entnahmevorrichtung (16) zum selektiven Entnehmen von Gegenständen (11) von einem Träger (09) zwischen Eingabevorrichtung (12) und Ausgabevorrichtung (26) angeordnet ist, wobei die Eingabevorrichtung (12) ausgelegt ist, in einem Arbeitstakt der Zwischenspeichervorrichtung (01) eine Mehrzahl von Stapeln (11) von Druckerzeugnissen aufzunehmen, während die Entnahmevorrichtung (16) zum Entnehmen eines einzelnen Stapels (11) in einem Arbeitstakt ausgelegt ist.

4. Zwischenspeichervorrichtung nach Anspruch 1, **dadurch gekennzeichnet, dass** der von der ersten zu der zweiten Stelle bewegte Bereich einen in einer ersten Richtung orientierten Abschnitt (07) und einen in einer zu der ersten entgegengesetzten zweiten Richtung orientierten Abschnitt (08) aufweist.

5. Zwischenspeichervorrichtung nach Anspruch 4, **dadurch gekennzeichnet, dass** der von der ersten zu der zweiten Stelle bewegte Bereich der Bahn länger als der von der zweiten zu der ersten Stelle bewegte Bereich ist.

6. Zwischenspeichervorrichtung nach Anspruch 3, **dadurch gekennzeichnet, dass** die Entnahmevorrichtung (16) an dem gleichen Abschnitt (07) der Bahn wie die Eingabevorrichtung (12) angeordnet ist.

7. Zwischenspeichervorrichtung nach einem der Ansprüche 3 bis 6, **dadurch gekennzeichnet, dass** die Eingabevorrichtung (12) ausgelegt ist, um jeweils eine in einer Reihe angeordnete Mehrzahl von Stapeln (11) quer zur Längsrichtung der Reihe auf einen Träger (09) zu verlagern.

8. Zwischenspeichervorrichtung nach einem der Ansprüche 3 bis 7, **dadurch gekennzeichnet, dass** die Ausgabevorrichtung (26) ausgelegt ist, um eine Reihe von Stapeln (11) von einem Träger (09) quer zur Längsrichtung der Reihe auszugeben.

9. Zwischenspeichervorrichtung nach Anspruch 8, **dadurch gekennzeichnet, dass** der Ausgabevorrichtung (26) eine parallel zu der Längsrichtung fördernde Bandfördereinrichtung (27) nachgeordnet ist.

10. Zwischenspeichervorrichtung nach einem der vorhergehenden Ansprüche, **dadurch gekennzeichnet, dass** die Bahn sich im wesentlichen vertikal erstreckt.

11. Zwischenspeichervorrichtung nach einem der vohergehenden Ansprüche, **dadurch gekennzeichnet, dass** die Träger (09) an quer zur Umlaufrichtung der Bahn orientierten Führungsschienen (06) verschiebbar sind, und dass die Verschiebevorrichtung (21; 24) jeweils eine Verschiebung eines Träger (09) von ersten Führungsschienen (06) des ersten Abschnitts (07) auf zweite Führungsschienen (06) des zweiten Abschnitts (08) bewirkt.

12. Zwischenspeichervorrichtung nach Anspruch 11, **dadurch gekennzeichnet, dass** die Verschiebevorrichtung (21; 24) Übergangsschienen (23) zum Unterstützen eines Tragers (09) beim Übergang von den ersten Führungsschienen (06) auf die zweiten Führungsschienen (06) aufweist.

13. Zwischenspeichervorrichtung nach einem der vorhergehenden Ansprüche, **dadurch gekennzeichnet, dass** die Eingabevorrichtung (12) und die Ausgabevorrichtung (26) jeweils an einem aufwärts bewegten Abschnitt (07) bzw. einem abwärts bewegten Abschnitt (08) der Bahn angeordnet sind.

14. Verfahren zum Transportieren von Stapeln von Banknoten mit einer Zwischenspeichervorrichtung gemäss Anspruch 1, **gekennzeichnet durch** folgende Schritte:
- eine Mehrzahl von Stapel werden den Trägem (09) der Zwischenspeichervorrichtung in einer Längsrichtung nebeneinander geordnet. entsprechend der Anordnung in der die Stapel zuvor von einem Bogenstapel abgeschnitten wurden, zugeführt
- mindestens ein Stapel wird an einer ersten Stelle der Bahn der Zwischenspeichervorrichtung entnommen, wodurch eine Lücke zwischen den Stapeln entsteht,
- eine Qualitätskontrolle wird durchgeführt,
- die Träger (09) mit den verbleibenden Stapeln werden von ersten Führungsschienen (06) eines ersten Abschnittes (07) auf zweite Führungsschienen eines zweiten Abschnitts (08) der Bahn verschoben,
- die kontrollierten Stapel oder Ersatzgegenstände werden der Zwischenspeichervorrichtung in die vorher entstandene Lücke an einer anderen Stelle des zweiten Abschnitts der Bahn der Zwischenspeichervorrichtung wieder zugeführt,
- die Stapel werden der Zwischenspeichervorrichtung entnommen.

15. Verfahren nach Anspruch 14, **dadurch gekennzeichnet, dass** die Bahn sich im Wesentlichen vertikal erstreckt, und dass sie an der ersten und an der zweiten Stelle vertikal verläuft.

## Claims

1. Intermediate storage device for objects to be transported, with at least one conveyor means (04) guided on sections (07, 08) of a conveyor, on which means is arranged a multiplicity of carriers (09), with an input device (12) for input of the objects (11) at a first point on the conveyor and an output device (26) for output of the objects (11) at a second point on the conveyor, wherein the carriers (09) can be extracted from the conveyor means (04) at a first point on the conveyor and inserted at a second point on the conveyor, wherein a pusher device (21) is provided to move the carriers (09) from one section (07) of the conveyor to the other section (08), **characterised in that** the conveyor is driven in steps and that the pusher device (21, 24) is active in a rest phase between two movement steps of the conveyor.

2. Intermediate storage device according to claim 1, **characterised in that** the objects are formed as stacks (11) of printed products.

3. Intermediate storage device according to claim 2, **characterised in that** on each carrier (09) are arranged several objects (11) and that an extraction device (16) is provided for selective extraction of objects (11) from a carrier (09) between the input device (12) and the output device (26), wherein the input device (12) is designed to pick up a multiplicity of stacks (11) of printed products in one working stroke of the intermediate storage device (01), while the extraction device (16) is designed to extract an individual stack (11) in one working stroke.

4. Intermediate storage device according to claim 1, **characterised in that** the zone moved from the first point to the second has a section (07) oriented in a first direction and a section (08) oriented in a second direction opposite to the first.

5. Intermediate storage device according to claim 4, **characterised in that** the zone of the conveyor moved from the first point to the second is longer than the zone moved from the second point to the first.

6. Intermediate storage device according to claim 3, **characterised in that** the extraction device (16) is arranged on the same section (07) of the conveyor as the input device (12).

7. Intermediate storage device according to any of claims 3 to 6, **characterised in that** the input device (12) is designed in each case to move a multiplicity of stacks (11) arranged in a row onto a carrier (09) transversely to the longitudinal direction of the row.

8. Intermediate storage device according to any of claims 3 to 7, **characterised in that** the output device (26) is designed to output a row of stacks (11) from a carrier (09) transversely to the longitudinal direction of the row.

9. Intermediate storage device according to claim 8, **characterised in that** after the output device (26) is arranged a belt conveyor device (27) moving parallel to the longitudinal direction.

10. Intermediate storage device according to any of the preceding claims, **characterised in that** the conveyor extends essentially vertically.

11. Intermediate storage device according to anyone of the preceding claims, **characterised in that** the carriers (09) can be pushed onto guide rails (06) oriented transverse to the circulation direction of the conveyor, and that the pusher device (21, 24) in each case causes a movement of a carrier (09) from first guide rails (06) of the first section (07) onto second guide rails (06) of the second section (08).

12. Intermediate storage device according to claim 11, **characterised in that** the pusher device (21, 24) has transitional rails (23) to support a carrier (09) on transition from the first guide rails (06) to the second guide rails (06).

13. Intermediate storage device according to any of the preceding claims, **characterised in that** the input device (12) and the output device (26) are arranged on an upwardly moving section (07) and a downwardly moving section (08) respectively of the conveyor.

14. Process for the transport of stacks of bank notes with an intermediate storage device according to claim 1, **characterised by** the following steps:
- a multiplicity of stacks are supplied to carriers (09) of the intermediate storage device arranged next to each other in a longitudinal direction, corresponding to the arrangement in which the stacks were previously cut from a sheet stack,
- at least one stack is extracted at a first point from the conveyor of the intermediate storage device, creating a gap between the stacks,
- a quality control is performed,
- the carriers (09) with the remaining stacks are moved from first guide rails (06) of a first section (07) onto second guide rails of a second section (08),
- the checked stacks or substitute objects are returned to the intermediate storage device in the gap previously created at another point of the second section of the conveyor of the intermediate storage device,
- the stacks are removed from the intermediate storage device.

15. Process according to claim 14, **characterised in that** the conveyor extends essentially vertically and runs vertically at the first and second points.

## Revendications

1. Dispositif de stockage intermédiaire pour des objets à transporter, comportant au moins un moyen de transport (04) guidé sur des tronçons (07 ; 08) d'une voie sur lequel est disposée une pluralité de supports (09), comportant un dispositif d'entrée (12) pour l'entrée des objets (11) en un premier point de la voie et un dispositif de sortie (26) pour la sortie des objets (11) en un deuxième point de la voie, les supports (09) pouvant être prélevés des moyens de transport (04) en un premier point de la voie et pouvant sortir en un deuxième point de la voie, un dispositif de déplacement (21) étant disposé pour le déplacement des supports (09) d'un tronçon (07) de la voie à l'autre tronçon (08), **caractérisé en ce que** la voie est entraînée pas à pas et **en ce que** le dispositif de déplacement (21 ; 24) intervient pendant une phase de repos entre deux pas de la voie.

2. Dispositif de stockage intermédiaire selon la revendication 1, **caractérisé en ce que** les objets sont réalisés sous la forme de piles (11) de produits imprimés.

3. Dispositif de stockage intermédiaire selon la revendication 2, **caractérisé en ce que** plusieurs objets (11) sont disposés sur chacun des supports (09) et **en ce qu'**un dispositif de prélèvement (16) est disposé entre le dispositif d'entrée (12) et le dispositif de sortie (26) pour le prélèvement sélectif d'objets (11) sur un support (09), le dispositif d'entrée (12) étant conçu pour prendre une pluralité de piles (11) de produits imprimés dans un cycle de travail du dispositif de stockage intermédiaire (01), tandis que le dispositif de prélèvement (16) est conçu pour prélever une seule pile (11) dans un cycle.

4. Dispositif de stockage intermédiaire selon la revendication 1, **caractérisé en ce que** la zone déplacée d'un premier à un deuxième point présente un tronçon (07) orienté dans un premier sens et un tronçon (08) orienté dans un deuxième sens inverse par rapport au premier.

5. Dispositif de stockage intermédiaire selon la revendication 4, **caractérisé en ce que** la zone de la voie déplacée du premier au deuxième point est plus longue que la zone déplacée du deuxième au premier point.

6. Dispositif de stockage intermédiaire selon la revendication 3, **caractérisé en ce que** le dispositif de prélèvement (16) est disposé sur le même tronçon (07) de la voie que le dispositif d'entrée (12).

7. Dispositif de stockage intermédiaire selon l'une des revendications 3 à 6, **caractérisé en ce que** le dispositif d'entrée (12) est conçu pour déplacer à chaque fois sur un support (09) une pluralité de piles (11) disposée en une rangée, transversalement au sens longitudinal de la rangée.

8. Dispositif de stockage intermédiaire selon l'une des revendications 3 à 7, **caractérisé en ce que** le dispositif de sortie (26) est conçu pour sortir une rangée de piles d'un support (09) transversalement au sens longitudinal de la rangée.

9. Dispositif de stockage intermédiaire selon la revendication 8, **caractérisé en ce qu'**un convoyeur à bande (27) se déplaçant parallèlement au sens longitudinal est monté en aval du dispositif de sortie (26).

10. Dispositif de stockage intermédiaire selon une des revendications précédentes, **caractérisé en ce que** la voie suit une trajectoire sensiblement verticale.

11. Dispositif de stockage intermédiaire selon l'une des revendications précédentes, **caractérisé en ce que** les supports (09) peuvent être déplacés sur des rails de guidage (06) orientés transversalement au sens de circulation de la voie, et **en ce que** le dispositif de déplacement (21 ; 24) réalise un déplacement d'un support (09) de premiers rails de guidage (06) du tronçon (07) sur des deuxièmes rails de guidage (06) du deuxième tronçon (08).

12. Dispositif de stockage intermédiaire selon la revendication 11, **caractérisé en ce que** le dispositif de déplacement (21 ; 24) présente des rails de transfert (23) pour soutenir un support (09) lors du transfert des premiers rails de guidage (06) sur les deuxièmes rails de guidage (06).

13. Dispositif de stockage intermédiaire selon une des revendications précédentes, **caractérisé en ce que** le dispositif d'entrée (12) et le dispositif de sortie (26) sont chacun disposés sur un tronçon (07) de la voie se déplaçant vers le haut, respectivement un tronçon (08) se déplaçant vers le bas.

14. Procédé pour le transport de piles de billets de banque avec le dispositif de stockage intermédiaire selon la revendication 1, **caractérisé par** les étapes suivantes :
- une pluralité de piles, juxtaposées dans un sens longitudinal correspondant à la disposition dans laquelle les piles ont préalablement été coupées dans une pile de feuilles, est amenée aux supports (09) du dispositif de stockage,
- au moins une pile est prélevée en un premier point de la voie du dispositif de stockage intermédiaire, ce qui crée un vide entre les piles,
- un contrôle de la qualité est effectué,
- les supports (09) portant les piles restantes sont déplacés des premiers rails de guidage (06) d'un premier tronçon (07) sur les deuxièmes rails de guidage (06) d'un deuxième tronçon (08) de la voie,
- les piles contrôlées ou des objets de remplacement sont ramenés au dispositif de stockage intermédiaire dans le vide créé précédemment, en un autre point du deuxième tronçon de la voie du dispositif de stockage intermédiaire,
- les piles sont prélevées du dispositif de stockage intermédiaire.

15. Procédé selon la revendication 14, **caractérisé en ce que** la voie s'étend sensiblement verticalement et **en ce qu'**elle passe verticalement au niveau du premier et du deuxième points.
